# EUROPEAN PATENT SPECIFICATION

(11) **EP 2 356 203 B1**
(45) Date of publication and mention of the grant of the patent: **29.05.2013**
(21) Application number: 09756684.8
(22) Date of filing: 19.11.2009
(51) Int. Cl.: C10M 159/24, C10M 177/00, C10N 10/08, C10N 10/02, C10N 20/02, C10N 20/04, C10N 30/04, C10N 30/06, C10N 30/12, C10N 40/25, C10N 70/00

(54) **PROCESS FOR THE PREPARATION OF ADDITIVES FOR LUBRICANTS CONTAINING CERIUM**
VERFAHREN ZUR HERSTELLUNG VON ADDITIVEN FÜR CERHALTIGE SCHMIERMITTEL
PROCÉDÉ POUR LA PRÉPARATION D'ADDITIFS POUR LUBRIFIANTS CONTENANT DU CÉRIUM

(30) Priority: 24.11.2008 IT MI20082093
(43) Date of publication of application: 17.08.2011
(73) Proprietor: ENI S.p.A., 00144 Rome (IT)
(72) Inventor: NOTARI, Marcello, I-20097 San Donato Milanese (Milano) (IT); D'ELIA, Luigi, I-26025 Pandino (Cremona) (IT); PIANTA, Orazio, I-20010 Santo Stefano Ticino (Milano) (IT)
(74) Representative: Maiwald Patentanwalts GmbH
(86) International application number: PCT/EP2009/008411
(87) International publication number: WO 2010/057676

(56) References cited:
- WO-A2-2007/120352
- IT-A1- MI20 071 953

## Description

The present invention relates to an improved process for the preparation of overbased additives of organic acids, with a high basicity, stable in lubricating oil, containing cerium and an alkaline earth metal. These products are useful in lubricant oils as detergent additives, anti-friction additives and additives for tribological couplings at extreme pressure and also as additives for enhancing the quality of diesel engine emissions.

Italian patent application MI2007A001953 describes a process for the preparation of overbased additives of organic acids containing cerium and an alkaline earth metal, consisting in the treatment of an oil dispersion of a cerium compound of organic acids with an oxide or hydroxide of an alkaline earth metal and subsequent carbonation with carbon dioxide. In the examples included in the above patent application, the organic acid compounds containing cerium used in the preparation process of overbased salts containing cerium and alkaline earth metal have a cerium content lower than the stoichiometric value, which corresponds to an incomplete neutralization of the organic acid, from which they derive. The same patent application also indicates that the increase in cerium content in these compounds, corresponding to the increase in the neutralization degree of the organic acids, makes the preparation of stable colloidal dispersions of overbased salts containing cerium and an alkaline earth metal, more difficult. Having the availability of stable oil dispersions of neutral cerium salts and overbased salts containing cerium and alkaline earth metal, with a higher cerium content, can, on the other hand, be advantageous for improving the efficiency of these products in lubricant oils as antiwear additives, anti-friction additives, additives for tribological couplings at extreme pressure and additives for improving the quality of diesel engine emissions. Their use in lubricant oils, in fact, allows the Cerium to be conveyed onto the particulate trap for the treatment of exhausted gases improving its efficiency.

WO 2007/120352 discloses a process for the preparation of overbasic detergent a by several carbonation steps in mineral oil of a basic compound.

The problems of the known art are solved by the improved process, object of the present invention. This process allows overbased additives containing cerium and alkaline earth metal to be obtained, characterized by a high basicity, a high stability in oil and a higher cerium content.

The objective of the synthesis process, object of the present invention, is not only to prepare overbased salts containing cerium and alkaline earth metal, but rather to obtain a colloidal dispersion of these salts which can be easily filtered, is stable in oil and consequently has no problems of coagulation of the colloid with the formation of gel.

It has been surprisingly found that by carrying out the carbonation phase of the process for the preparation of overbased additives containing cerium and alkaline earth metal in two or more subsequent steps, colloidal dispersions are obtained, having a high basicity, a high cerium content and stable in lubricating oil, which could otherwise not be obtained by operating with a single carbonation step.

The present invention therefore relates to an improved synthesis process of oil dispersions of overbased salts containing cerium and alkaline earth metal. Said process consists in treating the oil dispersions of cerium salts of organic acids with a hydroxide or oxide of an alkaline earth metal and subsequent carbonation with carbon dioxide, carried out in two or more subsequent steps.

The oil dispersions of overbased salts of organic acids, containing cerium and alkaline earth metal, prepared with the process object of the present invention, are characterized by a content of lubricating oil ranging from 20% to 90% by weight, preferably from 30% to 70% by weight, a cerium content corresponding to a ratio between the equivalents of cerium and those of the organic acid ranging from 0.8 to 1.2, preferably from 0.9 to 1.1, and a content of alkaline earth metal corresponding to a ratio between the equivalents of alkaline earth metal and the equivalents of organic acid ranging from 1 to 50, preferably from 5 to 30. The TBN value (total base number), expressed in mgKOH/g ranges from 50 to 450, preferably from 100 to 400. The cerium contained in the above oil dispersions can be in oxidation states (III) and (IV), preferably in oxidation state (III). Preferred alkaline earth metals are Magnesium and Calcium. The preferred alkaline earth metal is Calcium.

The process for the preparation of the above oil dispersions of overbased salts containing cerium and alkaline earth metal comprises reaction between the following components:
(A) an oil dispersion of a cerium salt of organic acids;
(B) a base compound of an alkaline earth metal;
(C) a solvent or mixture of solvents;
(D) a promoter or mixture of promoters of the carbonation reaction;
(E) lubricant base oil;
(F) carbon dioxide, added in at least two steps.

Component (A) is an oil dispersion of a cerium salt of organic acids characterized by a content of lubricant oil ranging from 20% to 90% by weight, preferably from 30% to 70% by weight and characterized by a cerium content corresponding to a ratio between the equivalents of cerium and those of the organic acid, from which it derives, ranging from 0.8 to 1.2, preferably from 0.9 to 1.1. The oil dispersion of the cerium salt of organic acids (A) is obtained by the reaction of an organic acid (A') with a basic compound of cerium (B'), in the presence of a solvent, a promoter and lubricating base oil (in general the lubricating base oil (E)), according to the method described in Italian patent application MI2007A001953. The organic acid (A') can be:
- a sulphonic acid having the formula:

   (R¹)ₙ-G-SO₃H (I)

   wherein R¹ is a linear or branched alkyl group containing from 6 to 40 carbon atoms or R¹ is an alkyl substituent deriving from a polymer of a C₂-C₆ olefin;
   G is a C₆-C₂₀ aromatic hydrocarbon, an aliphatic hydrocarbon containing from 5 to 20 carbon atoms. G is preferably benzene, naphthalene, toluene, xylenes, and more preferably benzene;
   n is zero or an integer ranging from 1 to 5, preferably 1, 2 or 3, more preferably 1 or 2.

Examples of sulphonic acids which can be used are di-alkyl benzene sulphonic acids and mono-alkyl benzene sulphonic acids. Examples of di-alkyl benzene sulphonic acids are: di-nonyl benzene sulphonic acid, di-decyl benzene sulphonic acid, di-undecyl benzene sulphonic acid, di-dodecyl benzene sulphonic acid, dialkyl benzene sulphonic acids which contain alkyl substituents deriving from polypropylene, polyisobutene and poly-1-butene, or mixtures of the above acids. Examples of mono-alkyl benzene sulphonic acids which can be used are those containing alkyl substituents deriving from polypropylene, polyisobutene, or mixtures of the above acids.

The preferred sulphonic acids have an acid content ranging from 50 to 99% by weight, preferably from 60 to 90% by weight and have an inorganic acidity, expressed as sulphuric acid, preferably lower than 5% by weight.
- a carboxylic acid having the formula 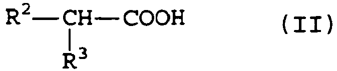
   wherein R² is a linear or branched alkyl or alkenyl group, containing from 6 to 40 carbon atoms and preferably from 10 to 24;
   R³ is either hydrogen, an alkyl group containing from 1 to 4 carbon atoms, or -CH₂COOH.

Examples of saturated carboxylic acids having formula (II) are capric acid, lauric acid, myristic acid, stearic acid, isostearic acid, arachidic acid, behenic acid and lignoceric acid.

Examples of unsaturated carboxylic acids having formula (II) are lauroleic acid, myristoleic acid, palmitoleic acid, oleic acid, gadoleic acid, erucic acid, linoleic acid and linolenic acid. Mixtures of acids can be used, such as for example mixtures of either synthetic or natural acids, containing both saturated and unsaturated acids.
- a salicylic acid possibly substituted with linear or branched alkyl groups, in a number ranging from 1 to 3, preferably 1 and 2, containing from 6 to 40 carbon atoms. Examples of alkyl-substituted salicylic acids are those containing alkyl substituents deriving from polypropylene, polyisobutene and poly-1-butene.
- a phenol or sulphurized phenol, possibly substituted with linear or branched alkyl groups, in a number ranging from 1 to 3, preferably 1 and 2, containing from 6 to 40 carbon atoms. Examples of alkyl-substituted phenols or sulphurized phenols are those containing alkyl substituents deriving from polypropylene, polyisobutene and poly-1-butene.

The organic acid (A') can also be a mixture of the above organic acids. It is preferably a sulphonic acid or a mixture of sulphonic acids.

The cerium basic compound (B') can contain cerium in oxidation state (IV) or in oxidation state (III), preferably in oxidation state (III). The preferred cerium basic compound is cerium (III) carbonate, as it allows the complete neutralization of the organic acid (A'). The quantity of cerium basic compound used corresponds to a ratio between the equivalents of the cerium basic compound and those of organic acid ranging from 0.9 to 3, preferably from 0.9 to 1.5.

Component (B) is a basic compound of an alkaline earth metal, preferably a basic compound of calcium, magnesium, barium, more preferably a basic compound of calcium. The basic compound is preferably an oxide or a hydroxide. The preferred basic compound is calcium hydroxide (Ca(OH)₂). The quantity of basic compound of alkaline earth metal used corresponds to a ratio between the equivalents of the basic compound of alkaline earth metal and those of component (A), ranging from 1 to 50, preferably from 5 to 30.

Component (C) is a solvent or a mixture of solvents selected from:
a hydrocarbon solvent which can be either aromatic or aliphatic. Examples of suitable hydrocarbon solvents include benzene; alkyl-substituted benzene, such as for example toluene, xylenes, halogen-substituted benzenes; aliphatic paraffins, such as for example hexane and heptane; cyclo-aliphatic paraffins. The preferred solvent is toluene.

The solvent is used in a quantity corresponding to a weight percentage, calculated with respect to component (A), ranging from 10 to 500, preferably from 50 to 300.

Component (D) is the promoter of the reaction selected from:
D-1) An alcohol containing from 1 to 20 carbon atoms, such as for example methanol or 2-ethyl hexanol.
D-2) Water, which can come from the solvent, from another promoter, can be the reaction water, or can be added.
D-3) A glycol, such as for example ethylene glycol or a polyalkylene glycol.
D-4) A ketone containing from 1 to 20 carbon atoms, such as cyclohexanone.
D-5) An ester of a carboxylic acid, such as ethyl acetate.

In the preparation process, object of the present invention, various promoters can be used. Promoters which are preferably adopted are water and methanol.

The promoter is added in a quantity corresponding to a weight percentage, calculated with respect to the basic compound of alkaline earth metal, ranging from 2 to 400, preferably from 5 to 200.

Component (F) is carbon dioxide, used for carbonating the excess of component (B) and added in two or more subsequent steps. The carbon dioxide can be added as a gas, or as a solid, preferably as a gas. The total quantity of carbon dioxide used corresponds to a ratio between the equivalents of carbon dioxide and those of the alkaline earth metal base ranging from 0.6 to 1.1, preferably from 0.7 to 0.9. The carbon dioxide is preferably added in defect with respect to the base to be carbonated (oxide or hydroxide) in order to stabilize the colloidal dispersion of the product, facilitating its subsequent filtration. The quantity of carbon dioxide which is used in each carbonation step, expressed in weight percentage with respect to the total quantity, ranges from 5 to 95, preferably from 20 to 80.

Component (E) is a lubricating base oil used as dispersant of the overbased salt containing cerium and alkaline earth metal. The lubricating base oil can be of animal, vegetable, mineral origin, or it can be a synthetic oil. Mineral and synthetic lubricant base oils are preferred. Suitable mineral lubricating base oils are those deriving from petroleum, such as for example naphthene base oils, paraffinic base oils or a mixture thereof. Suitable synthetic lubricating base oils are esters, such as for example di-octyl adipate, di-octyl sebacate, tri-decyl adipate, or polymeric hydrocarbons, such as, for example, poly-alpha-olefins or liquid polyisobutenes. Particularly preferred lubricating base oils are mineral base oils. The lubricating base oil is added at the beginning of the preparation process together with the other reagents, or during the process, or at the end, or in fractioned parts in the different process phases, in a total quantity corresponding to a weight percentage, calculated with respect to component (A), ranging from 10 to 400, preferably from 20 to 200.

Other components can be optionally added to favour the carbonation, to control the variation in the viscosity and improve the filterability, such as for example, short-chain carboxylic acids and inorganic halides.

The process for the preparation of the oil dispersion of overbased salts of organic acids containing cerium and an alkaline earth metal, object of the present invention, can be carried out by adding components (A), (B), (C), (D) and (E) to the reaction in any order. Component (F) must be added subsequently to component (B), in two or more subsequent steps.

The preparation process is preferably carried out by initially adding component (B) to a mixture consisting of component (C) and a part of component (E) and subsequently adding component (A). After the subsequent addition of component (D) the carbonation is carried out with carbon dioxide (component F) in two or more subsequent steps, at the end of each of which the maturing phase of the colloidal dispersion is carried out. At the end of the last maturing phase, a second part of lubricant base oil (E) is optionally added.

Even more preferably, the preparation process is carried out by initially adding component (B) to a mixture consisting of component (C), component (D) and a part of component (E) and subsequently adding component (A). The carbonation is carried out, as already described, in two or more subsequent steps, followed by the corresponding maturing phases. At the end of the last maturing phase, a second part of lubricant oil is optionally added.

The temperature at which the first part of the preparation process is carried out, which consists of the overbasing phase, ranges from 15°C to 200°C, preferably from 30°C to 150°C. The selection of the optimum temperature depends on the kind of solvent used. In this phase, the cerium salt of organic acids (A) is conveniently added to the reaction mixture over a time ranging from 2 minutes to 90 minutes, preferably from 10 minutes to 60 minutes.

Each carbonation step, on the other hand, is carried out at a temperature ranging from 10°C to 150°C, preferably from 15°C to 60°C. Each addition of carbon dioxide, as a gas, is carried out over a time ranging from 10 minutes to 6 hours, preferably from 30 minutes to 3 hours. At the end of each carbonation phase, the maturing phase is carried out, which is carried out at a higher temperature than that of the carbonation. The maturing temperature ranges from 20°C to 160°C, preferably from 30°C to 90°C, maintained for a time ranging from 5 minutes to 2 hours, preferably from 10 minutes to 1 hour. At the end of the last maturing phase, a second part of lubricating base oil (E) is optionally added and the mixture is heated to a temperature ranging from 40°C to 150°C, for a time ranging from 5 minutes to 2 hours, preferably from 10 minutes to 1 hour.

The product is subsequently recovered by separating the promoter (D), including the reaction water, and solvent (C), by distillation. During the distillation, a third portion of lubricating base oil (E) is optionally added. At the end, the product is obtained as a dispersion in lubricating base oil (E).

The distillation of the solvents is carried out by gradually increasing the temperature up to a maximum value of 200°C, preferably up to 160°C, maintaining the product at this temperature for the time necessary for obtaining the complete removal of the solvents. The distillation of the solvents can be carried out at atmospheric pressure, or under vacuum, or partly at atmospheric pressure and partly under vacuum.

At the end, the product is filtered using a filtration aid or, alternatively, it can be centrifuged.

The oil dispersions of overbased salts of organic acids containing cerium and alkaline earth metal, whose preparation process is object of the present invention, can be used in lubricant compositions as additives with detergent properties, capable of limiting the formation of deposits. These additives, containing a large reserve of basicity, are also capable of neutralizing the acid products formed in the lubricating oil of an internal combustion engine preventing corrosion phenomena.

These additives, containing cerium, can also be used in lubricant compositions as additives capable of improving the anti-friction and anti-wear properties and as additives for extreme pressure tribological couplings.

These additives can also be used in lubricant compositions in order to improve the quality of the emissions of internal combustion engines. In particular, the use of these additives in lubricating oils for diesel engines allows the compounds containing cerium to be conveyed onto the particulate trap for the treatment of exhausted gases, improving its efficiency.

A further object of the present invention therefore relates to lubricant compositions containing one or more lubricating base oils of a synthetic, mineral, vegetable or animal origin and oil dispersions of overbased salts of organic acids containing cerium and alkaline earth metals, obtained according to the process of the present invention, at a concentration, expressed as weight percentage with respect to the lubricating oil, ranging from 0.2 to 10, preferably from 0.5 to 7. These lubricant compositions, used for example as engine oils for motor vehicles, can contain other additives such as oil dispersions of neutral cerium salts of organic acids, other detergent, anti-friction, anti-wear additives and additives for extreme pressure tribological couplings, antioxidants, dispersants, viscosity index improvers, additives for lowering the pour point and others.

The following examples are provided for purely illustrative and non-limiting purposes of the present invention.

In the following examples, the TBN (total base number) and TAN (total acid number) values, expressed as mgKOH/g, were determined as described in ASTM D2896 and ASTM D664, respectively. The calcium and cerium contents were determined by means of plasma atomic emission spectrometry (ICP-AES), the viscosities at 100°C were determined according to the method ASTM D445, the stripping end sediments and those on the finished product according to the methods ASTM D96 and ASTM D2273 respectively and the turbidity (expressed in nephelometric units NTU) was measured by means of instrument HACH 4100.

The preparation reactions of the additives containing cerium were carried out in a RC-1 Mettler calorimeter consisting of a 5-necked jacketed glass reactor, having a volume of 2 litres, thermostat-regulated by circulation in the jacket of a fluid coming from a thermocryostat and equipped with: a mechanical blade stirrer; a Claisen condenser cooled with water, equipped with a flask and connected to a vacuum line; a bottom outlet equipped with a teflon tap through which carbon dioxide is bubbled into the reaction mass and a thermocouple for measuring the temperature. The system is controlled by a computer, which allows the desired heating and cooling programs to be set. The feeding of carbon dioxide is carried out from a cylinder, positioned on a balance, which is connected to the bottom of the reactor by means of a rubber tube.

### Example 1

### Preparation of the oil dispersion of the neutral cerium (III) salt

The following products are charged into the reactor described above: 444 g of toluene, 50 g of water. The stirring is initiated (300 revs/minute), 80 g of cerium (III) carbonate hydrate of Aldrich (Ce₂(CO₃)₃ · x H₂O), are charged, the internal temperature is brought to 50°C and after 30 minutes 383.4 g (0,5944 moles) of dialkylbenzene sulphonic acid (SP1270 of Sasol Italy S.p.A.), characterized by a Molecular Weight = 465, a content of active substance (sulphonic acid content) = 72.11% by weight and an inorganic acidity (H₂SO₄) = 0.68% by weight, are added by means of a dropping funnel. During the addition of the acid, which is carried out in 30 minutes, carbon dioxide and heat are developed. The internal temperature is increased from 50°C to 60°C, the mixture is left under stirring at this temperature for an hour and 290 g of lubricating mineral base oil SN150 of the company ENI S.p.A are then dosed. At this point the volatile substances are removed by distillation using the following heating program at atmospheric pressure:
● from 60°C to 70°C in 30 minutes
● from 70°C to 125°C in 90 minutes
● from 125°C to 160°C in 60 minutes

Once the temperature of 160°C has been reached, the distillation is continued, reducing the pressure to 50 mbar, for an overall time of 60 minutes, in order to remove the residual volatile substances. The quantity of distillate collected is equal to 530.2 g.

The product (702.9 g) is treated with a quantity of filtration aid equal to 3% by weight and is filtered on a jacketed steel filter having a volume of 1 litre, with a filtering surface consisting of an 80 mesh steel net. Before the filtration, a panel of filtering earth is prepared on the filter. The filtration is carried out at a temperature of 160°C, with a pressure of 0.5 MPa (5 atmospheres) of nitrogen.

After filtration, the product has the following characteristics:
● Appearance: limpid blackish liquid
● Cerium content (ICP-AES): 4.23% by weight
● Viscosity at 100°C (ASTM D445): 16.60 cSt
● TBN (ASTM D2896): 0 mgKOH/g
● TAN (ASTM D664): 0 mgKOH/g

Infrared analysis of the product reveals that the neutralization of the sulphonic acid is complete (absence of the band at 898.5 cm⁻¹).

From the analytical results, it was possible to calculate the soap content of the product, which is equal to 43.2% by weight.

### Example 2

### Preparation of the oil dispersion of the neutral cerium (III) salt

The following products are charged into the reactor described above: 444 g of toluene, 71 g of water. The stirring is initiated (300 revs/minute), 130 g of cerium (III) carbonate hydrate of Aldrich (Ce₂(CO₃)₃ · x H₂O), are charged, the internal temperature is brought to 50°C and after 30 minutes 742 g (1.182 moles) of dialkylbenzenesulphonic acid (SP1270 of Sasol Italy S.p.A.), characterized by a Molecular Weight = 465, a content of active substance (sulphonic acid content) = 73.7% by weight and an inorganic acidity (H₂SO₄)= 0.66% by weight, are added by means of a dropping funnel. During the addition of the acid, which is carried out in 30 minutes, carbon dioxide and heat are developed. The internal temperature is increased from 50°C to 60°C, the mixture is left under stirring at this temperature for an hour and 191.5 g of lubricating mineral base oil SN150 of ENI S.p.A are then dosed. At this point the volatile substances are removed by distillation using the same heating program at atmospheric pressure as described in

### Example 1.

Once the temperature of 160°C has been reached, the distillation is continued, reducing the pressure to 50 mbar, for an overall time of 60 minutes, in order to remove the residual volatile substances. The quantity of distillate collected is equal to 563 g. At the end of the stripping, the product (990 g) has a content of sediments, measured in heptane according to the method ASTM D96, equal to 0.6% by volume.

The product (990 g) is treated with a quantity of filtration aid equal to 3% by weight and is filtered as described in Example 1.

After filtration, the product has the following characteristics:
● Appearance: limpid blackish liquid
● Viscosity at 100°C (ASTM D445): 35.50 cSt
● Cerium content (ICP-AES): 5.68% by weight (expected value: 5.7% by weight)
● TBN (ASTM D2896): 0 mgKOH/g
● TAN (ASTM D664): 4.7 mgKOH/g

Infrared analysis of the product reveals that there is still a small quantity of non-neutralized of sulphonic acid (band at 898.5 cm⁻¹). The conversion of the acid, calculated from the TAN, is equal to 93%.

From the analytical results, it was possible to calculate the soap content of the product, which is equal to 56.7% by weight.

### Example 3

### Preparation of the oil dispersion of the overbased salt containing cerium (III) and calcium carried out with two carbonation steps

The following products are charged into the reactor described above: 481 g of toluene, 288.7 g of methanol, 41 g of lubricating mineral base oil SN150, 23.6 g of water, 230.4 g of calcium hydroxide (purity = 96%, 2.989 moles), the temperature is brought to 40°C, stirring the mixture (300 revs/minute), which is maintained at this temperature for 15 minutes. 452 g of the neutral cerium (III) salt of Example 1 are then added by means of a dropping funnel. The addition is carried out over a period of 20 minutes, programming the automatic increase in the stirring from 300 to 500 revs/minute. At this point, the temperature is lowered to 28°C and the reactor is prepared for the first carbonation step, in which 70 g of carbon dioxide are introduced, through the valve situated on the bottom of the reactor, in about 111 minutes (flow equal to 15 Nl/hour). At the end of the first carbonation step, the reaction mixture is heated from 28°C to 50°C in 30 minutes and the temperature is maintained at 50°C for 20 minutes to allow the maturing of the colloidal dispersion. The second carbonation step is then carried out, by lowering the temperature to 28°C and introducing 31 g of carbon dioxide in about 49 minutes (flow equal to 15 Nl/hour). The maturing phase is subsequently carried out by heating the mixture from 28°C to 50°C in 30 minutes and maintaining this temperature for 20 minutes. 114.2 g of lubricating oil SN150 are added, the temperature is increased from 50°C to 65°C in 40 minutes and the volatile components are then removed by distillation, using the following heating program:
● from 65°C to 73°C in 90 minutes at atmospheric pressure
● from 73°C to 125°C in 60 minutes at atmospheric pressure, after which another fraction of oil SN150, equal to 114.2 g, is added
● from 125°C to 160°C in 60 minutes, under vacuum, at a residual pressure of 500 mbar.

Once the temperature of 160°C has been reached, the distillation is continued, reducing the pressure to 50 mbar, for an overall time of 60 minutes, in order to remove the residual volatile substances. The quantity of distillate collected is equal to 834.6 g. At the end of the stripping, the product (1002.3 g) has a content of sediments, measured in heptane according to the method ASTM D96, equal to 2.3% by volume.

The product is treated with a quantity of filtration aid equal to 3% by weight and is filtered on the steel filter as described in Example 1. The filtration is carried out at a temperature of 160°C, with a pressure of **0.5 MPa** (5 atmospheres) of nitrogen.

After filtration, the product has the following characteristics:
● Appearance: limpid dark liquid
● Calcium content (ICP-AES): 12% by weight (expected value: 11,96%by weight)
● Cerium content (ICP-AES): 1.89% by weight (expected value: 1.9% by weight)
● TBN (ASTM D2896): 326 mgKOH/g
● Initial sediments (ASTM D2273): 0.2% by volume
● Extended sediments (after 24 hours, ASTM D2273): 0.2% by volume
● Turbidity (Hach 4100 instrument): 20.8 NTU (nephelometric units)
● Viscosity at 100°C (ASTM D445): 68.40 cSt

From the analytical results, it was possible to calculate the following parameters and verify that the calcium incorporation was total:
● Soap content = 19,5% by weight
● CaCO₃ content = 22,9% by weight
● Ca(OH)₂ content = 5,1% by weight

### Example 4

### Preparation of the oil dispersion of the overbased salt containing cerium (III) and calcium carried out with two carbonation steps

The following products are charged into the reactor described above: 481.5 g of toluene, 288.9 g of methanol, 41.1 g of lubricating mineral oil SN150, 23.6 g of water, 230.6 g of calcium hydroxide (purity = 96%, 2.99 moles), the temperature is brought to 40°C, stirring the mixture (300 revs/minute), which is maintained at this temperature for 15 minutes. 452.4 g of the cerium (III) salt of Example 2 are then added by means of a dropping funnel. The addition is carried out over a period of 20 minutes, programming the automatic increase in the stirring from 300 to 500 revs/minute. At this point, the temperature is lowered to 28°C and the reactor is prepared for the first carbonation step, in which 70 g of carbon dioxide are introduced, through the valve situated on the bottom of the reactor, in about 111 minutes (flow equal to 15 Nl/hour). At the end of the first carbonation step, the reaction mixture is heated from 28°C to 50°C in 30 minutes and the temperature is maintained at 50°C for 20 minutes to allow the maturing of the colloidal dispersion. The second carbonation step is then carried out, by lowering the temperature to 28°C and introducing 33.8 g of carbon dioxide in about 54 minutes (flow equal to 15 Nl/hour). The maturing phase is subsequently carried out by heating the mixture from 28°C to 50°C in 30 minutes and maintaining this temperature for 20 minutes. 114.3 g of lubricating base oil SN150 are added, the temperature is increased from 50°C to 65°C in 40 minutes and the volatile components are then removed by distillation, using the following heating program:
- from 65°C to 73°C in 90 minutes at atmospheric pressure
- from 73°C to 125°C in 60 minutes at atmospheric pressure, after which another fraction of oil SN150, equal to 114.3 g, is added
- from 125°C to 160°C in 60 minutes, under vacuum, at a residual pressure of 500 mbar.

Once the temperature of 160°C has been reached, the distillation is continued, reducing the pressure to 50 mbar, for an overall time of 60 minutes, in order to remove the residual volatile substances. The quantity of distillate collected is equal to 837.1 g. At the end of the stripping, the product (1004 g) has a content of sediments, measured in heptane according to the method ASTM D96, equal to 2.6% by volume.

The product is treated with a quantity of filtration aid equal to 3% by weight and is filtered on the steel filter as described in Example 1. The filtration is carried out at a temperature of 160°C, with a pressure of **0.5 MPa** (5 atmospheres) of nitrogen.

After filtration, the product has the **following** characteristics:
● Appearance: limpid dark liquid
● Calcium content (ICP-AES): 11.9% by weight (expected value: 11.9%by weight)
● Cerium content (ICP-AES): 2.54% by weight (expected value: 2.56% by weight)
● TBN (ASTM D2896): 318 mgKOH/g
● Initial sediments (ASTM D2273): 0.01% by volume
● Extended sediments (after 24 hours, ASTM D2273): 0.01% by volume
● Viscosity at 100°C (ASTM D445): 29.5 cSt

From the analytical results, it was possible to calculate the following parameters and verify that the calcium incorporation was total:
● Soap content = 27,3% by weight
● CaCO₃ content = 23,5% by weight
● Ca(OH)₂ content = 4,5% by weight

### Example 5 comparative

### Preparation of the oil dispersion of the overbased salt containing cerium (III) and calcium carried out with a single carbonation step

The first part of the preparation process, corresponding to the overbasing phase, is carried out according to Example 3, using the same quantities of reagents and the same operating conditions. At the end of the addition to the reaction mixture of the oil dispersion of cerium (III) salt of Example 1, the temperature is lowered to 28°C and the reactor is prepared for the carbonation phase, in which 103.5 g of carbon dioxide are introduced, in a single step, through the valve situated on the bottom of the reactor, in about 165 minutes (flow equal to 15 Nl/hour). At the end of the carbonation phase, the reaction mixture is heated from 28°C to 50°C to allow the maturing of the colloidal dispersion. During this phase, the experimentation must be interrupted as a rapid increase in the viscosity of the product is observed, with the final formation of a gel due to the coagulation of the colloid.

### Example 6 comparative

### Preparation of the oil dispersion of the overbased salt containing cerium (III) and calcium carried out with a single carbonation step

The first part of the preparation process, corresponding to the overbasing phase, is carried out according to Example 4, using the same quantities of reagents and the same operating conditions. At the end of the addition to the reaction mixture of the oil dispersion of cerium (III) salt of Example 2, the temperature is lowered to 28°C and the reactor is prepared for the carbonation phase, in which 103.8 g of carbon dioxide are introduced, in a single step, through the valve situated on the bottom of the reactor, in about 160 minutes (flow equal to 15 Nl/hour). At the end of the carbonation phase, the reaction mixture is heated from 28°C to 50°C in 30 minutes and the temperature is maintained at 50°C for 20 minutes to allow the maturing of the colloidal dispersion. 114.3 g of lubricating base oil SN150 are added, the temperature is increased from 50°C to 65°C in 40 minutes and the volatile components are then removed by distillation, using the following heating program:
● from 65°C to 73°C in 90 minutes at atmospheric pressure
● from 73°C to 125°C in 60 minutes at atmospheric pressure, after which oil SN150, equal to 114.4 g, is added
● from 125°C to 160°C in 60 minutes, under vacuum, at a residual pressure of 500 mbar.

Once the temperature of 160°C has been reached, the distillation is continued, reducing the pressure to 50 mbar, for an overall time of 60 minutes, in order to remove the residual volatile substances. The quantity of distillate collected is equal to 837 g. At the end of the stripping, the product (1004 g) has a high content of sediments.

The product is treated with a quantity of filtration aid equal to 3% by weight and is filtered on the steel filter as described in Example 1. The filtration is carried out at a temperature of 160°C, with a pressure of 0.5 MPa (5 atmospheres) of nitrogen.

After filtration, the product has the following characteristics:

### ● Appearance: turbid dark liquid

The sediments present in the product rapidly increase due to the partial precipitation of the calcium carbonate. The product thus obtained is therefore not stable in oil and is partially insoluble in heptane.

## Claims

1. Improved process for the synthesis of oil dispersions of overbased salts containing cerium and an alkaline earth metal, comprising treating oil dispersions of organic acids cerium salts with a hydroxide or oxide of an alkaline earth metal and subsequently subjecting said dispersions to carbonation with carbon dioxide, **characterized in that** said carbonation is performed in two or more subsequent steps, followed by corresponding maturing phases.

2. Process according to claim 1 comprising the reaction between the following components:
(A) an oil dispersion of an organic acids cerium salt;
(B) an alkaline earth metal basic compound;
(C) a solvent or a mixture of solvents;
(D) a promoter or a mixture of promoters;
(E) lubricating base oil;
(F) carbon dioxide;
wherein components (A) - (E) are added following any order while component (F) is added subsequently to component (B) in at least two steps and, at the end of the reaction, the oil dispersion of the overbased salt containing cerium and alkaline earth metal is recovered by removing, by means of distillation, the promoter (D), including the reaction water, and the solvent (C) and separating the insoluble by-products through filtration or centrifugation.

3. Process according to claim 1 or 2, wherein the lubricating base oil content in the dispersion is in the range of 20 to 90% by weight.

4. Process according to any one of the preceding claims, wherein the cerium contained in the dispersion is in the oxidation state III.

5. Process according to any one of the preceding claims wherein the alkaline earth metal contained in the dispersion is calcium.

6. Process according to any one of the preceding claims, wherein the value of TBN (total base number), expressed in mgKOH/g, is in the range of 50 to 450.

7. Process according to any one of the preceding claims, wherein the oil dispersion of organic acids cerium salt (A) is obtained through the reaction of an organic acid with a cerium basic compound.

8. Process according to any one of the preceding claims, wherein the cerium basic compound is cerium (III) carbonate.

9. Process according to any one of the preceding claims, wherein the cerium content in the dispersion (A) corresponds to a ratio between the equivalent of cerium and those of the organic acid in the range of 0.8 to 1.2.

10. Process according to any one of the preceding claims, wherein the amount of basic compound of the alkaline earth metal (B) used corresponds to a ratio between the equivalents of the said metal basic compound and those of the component (A), in the range of 1 to 50.

11. Process according to any one of the preceding claims **from 2 to 10, wherein the alkaline earth metal** basic compound is calcium hydroxide.

12. Process according to any one of the preceding claims, wherein the solvent (C) is used at an amount corresponding to a percentage by weight, calculated on the component (A), in the range of 10 to 500.

13. Process according to any one of the preceding claims, wherein the promoter (D) is added at an amount corresponding to a percentage by weight, calculated on the alkaline earth metal basic compound, in the range of 2 to 400.

14. Process according to any one of the preceding claims, wherein the amount of total carbon dioxide (F) used corresponds to a ratio, between the equivalents of carbon dioxide and those of the alkaline earth metal base, in the range of 0.6 to 1.1.

15. Process according to claim 14, wherein the amount of carbon dioxide used in each step of carbonation, expressed in percentage by weight with respect to the total amount, is in the range of 5 to 95.

16. Process according to any one of the preceding claims, wherein the component (E) is a lubricating base oil used for dispersing the overbased salt containing cerium and alkaline earth metal.

17. Process according to claim 16, wherein the lubricating base oil (E) is added at the beginning of the preparation process alongside other reagents, or during the process, or at the end of the process, or divided into parts in the various steps of the process, at a total amount corresponding to a percentage by weight, calculated on the component (A), in the range of 10 to 400.

18. Process according to any one of the preceding claims, wherein the overbasing step is performed at a temperature in the range of 15°C to 200°C.

19. Process according to any one of the preceding claims, wherein each carbonation step is performed at a temperature in the range of 10°C to 150°C.

20. Process according to claim 19, wherein each carbonation step is followed by a maturing step which is performed at a temperature exceeding the carbonation temperature and in the range of 20°C to 160°C.

21. Lubricating compositions comprising:
a, one or more base oils of synthetic, mineral, vegetable or animal origin; and
b. 0.2 to 10% by weight of an oil dispersion, calculated on (a) + (b), of the organic acids overbased salts containing cerium and an alkaline earth metal obtainable according to any one of claims 1 - 20.

## Patentansprüche

1. Verbessertes Verfahren für die Synthese von ÖlDispersionen von überalkalischen Salzen, enthaltend Cer und ein Erdalkalimetall, umfassend Behandeln von ÖlDispersionen von Cer-Salzen organischer Säuren mit einem Hydroxid oder Oxid von einem Erdalkalimetall und anschließend Unterziehen der Dispersionen einer Carbonisierung mit Kohlendioxid, **dadurch gekennzeichnet, dass** die Carbonisierung in zwei oder mehreren aufeinander folgenden Schritten ausgeführt wird, gefolgt von entsprechenden Reifungsphasen.

2. Verfahren nach Anspruch 1, umfassend die Reaktion zwischen den nachstehenden Komponenten:
(A) einer Öl-Dispersion von einem Cer-Salz organischer Säuren;
(B) einer basischen Erdalkalimetall-Verbindung;
(C) einem Lösungsmittel oder einem Gemisch von Lösungsmitteln;
(D) einem Promotor oder einem Gemisch von Promotoren;
(E) Schmier-Grund-Öl;
(F) Kohlendioxid;
worin Komponenten (A) - (E) in beliebiger Reihenfolge zugegeben werden, während Komponente (F) anschließend an Komponente (B) in mindestens zwei Schritten zugegeben wird und an dem Ende der Reaktion die Öl-Dispersion des überalkalischen Salzes, enthaltend Cer und Erdalkalimetall, durch Entfernen mit Hilfe von Destillation des Promotors (D) einschließlich des Reaktionswassers und des Lösungsmittels (C), und Abtrennen der unlöslichen Nebenprodukte durch Filtration oder Zentrifugierung, gewonnen wird.

3. Verfahren nach Anspruch 1 oder 2, wobei der Gehalt an Schmier-Grund-Öl in der Dispersion in dem Bereich von 20 bis 90 Gew.-% liegt.

4. Verfahren nach einem der vorangehenden Ansprüche, wobei das in der Dispersion enthaltene Cer in dem OxidationsZustand III ist.

5. Verfahren nach einem der vorangehenden Ansprüche, wobei das in der Dispersion enthaltene Erdalkalimetall Calcium ist.

6. Verfahren nach einem der vorangehenden Ansprüche, wobei der Wert von TBN (Gesamt-Basen-Zahl), ausgedrückt in mg KOH/g, in dem Bereich von 50 bis 450 liegt.

7. Verfahren nach einem der vorangehenden Ansprüche, wobei die Öl-Dispersion von Cer-Salz (A) organischer Säuren durch die Reaktion von einer organischen Säure mit einer basischen Cer-Verbindung erhalten wird.

8. Verfahren nach einem der vorangehenden Ansprüche, wobei die basische Cer-Verbindung Cer (III)-carbonat ist.

9. Verfahren nach einem der vorangehenden Ansprüche, wobei der Cer-Gehalt in der Dispersion (A) einem Verhältnis zwischen dem Äquivalent von Cer und jenem der organischen Säure in dem Bereich von 0,8 bis 1,2 entspricht.

10. Verfahren nach einem der vorangehenden Ansprüche, wobei die Menge der basischen Verbindung des verwendeten Erdalkalimetalls (B) einem Verhältnis zwischen den Äquivalenten der basischen Metall-Verbindung und jenem der Komponente (A) in dem Bereich von 1 bis 50 entspricht.

11. Verfahren nach einem der vorangehenden Ansprüche von 2 bis 10, wobei die basische Erdalkalimetall-Verbindung Calciumhydroxid ist.

12. Verfahren nach einem der vorangehenden Ansprüche, wobei das Lösungsmittel (C) bei einer Menge entsprechend einem Gewichtsprozentsatz, berechnet auf die Komponente (A), in dem Bereich von 10 bis 500 verwendet wird.

13. Verfahren nach einem der vorangehenden Ansprüche, wobei der Promotor (D) bei einer Menge entsprechend einem Gewichtsprozentsatz, berechnet auf die basische Erdalkalimetall-Verbindung, in dem Bereich von 2 bis 400 zugegeben wird.

14. Verfahren nach einem der vorangehenden Ansprüche, wobei die Menge an gesamtem verwendetem Kohlendioxid (F) einem Verhältnis zwischen den Äquivalenten von Kohlendioxid und jenem der Erdalkalimetall-Base in dem Bereich von 0,6 bis 1,1 entspricht.

15. Verfahren nach Anspruch 14, wobei die Menge des in jedem Schritt der Carbonisierung verwendeten Kohlendioxids, ausgedrückt in Gewichtsprozentsatz hinsichtlich der gesamten Menge, in dem Bereich von 5 bis 95 liegt.

16. Verfahren nach einem der vorangehenden Ansprüche, wobei die Komponente (E) ein zum Dispergieren des überalkalischen Salzes, enthaltend Cer und Erdalkalimetall, verwendetes Schmier-Grund-Öl ist.

17. Verfahren nach Anspruch 16, wobei das Schmier-Grund-Öl (E) am Beginn des Herstellungs-Verfahrens neben anderen Reagenzien oder während des Verfahrens oder an dem Ende des Verfahrens oder geteilt in Teile in den verschiedenen Schritten des Verfahrens bei einer gesamten Menge entsprechend einem Gewichtsprozentsatz, berechnet auf die Komponente (A), in dem Bereich von 10 bis 400 zugegeben wird.

18. Verfahren nach einem der vorangehenden Ansprüche, wobei der überalkalisch machende Schritt bei einer Temperatur in dem Bereich von 15°C bis 200°C ausgeführt wird.

19. Verfahren nach einem der vorangehenden Ansprüche, wobei jeder Carbonisierungs-Schritt bei einer Temperatur in dem Bereich von 10°C bis 150°C ausgeführt wird.

20. Verfahren nach Anspruch 19, wobei jedem Carbonisierungs-Schritt ein Reifungs-Schritt, der bei einer Temperatur ausgeführt wird, die die Carbonisierungs-Temperatur übersteigt, und in dem Bereich von 20°C bis 160°C, folgt.

21. Schmiermittel-Zusammensetzungen, umfassend:
a. eines oder mehrere Grund-Öle von synthetischem, Mineral-, pflanzlichem oder tierischem Ursprung; und
b. 0,2 bis 10 Gew.-% von einer Öl-Dispersion, berechnet auf (a) + (b), von den überalkalischen Salzen organischer Säuren, enthaltend Cer und ein Erdalkalimetall, erhältlich nach einem der Ansprüche 1-20.

## Revendications

1. Procédé amélioré de synthèse de dispersions huileuses de sels surbasiques contenant du cérium et un métal alcalino-terreux, comprenant le traitement de dispersions huileuses de sels de cérium d'acides organiques avec un hydroxyde ou un oxyde de métal alcalino-terreux, puis la soumission desdites dispersions à une carbonatation avec du dioxyde de carbone, **caractérisé en ce que** ladite carbonatation est réalisée dans deux ou plus de deux étapes ultérieures, suivies des phases de maturation correspondantes.

2. Procédé selon la revendication 1, comprenant la réaction entre les composants suivants :
(A) une dispersion huileuse d'un sel de cérium d'acides organiques ;
(B) un composé basique de métal alcalino-terreux ;
(C) un solvant ou un mélange de solvants ;
(D) un promoteur ou un mélange de promoteurs ;
(E) une huile lubrifiante de base ;
(F) du dioxyde de carbone ;
dans lequel les composants (A) à (E) sont ajoutés dans n'importe quel ordre, tandis que le composant (F) est ajouté après le composant (B) dans au moins deux étapes et, à la fin de la réaction, la dispersion huileuse du sel surbasique contenant du cérium et un métal alcalino-terreux est récupérée en éliminant par distillation le promoteur (D), y compris l'eau de la réaction, et le solvant (C) et en séparant les sous-produits insolubles par filtration ou centrifugation.

3. Procédé selon la revendication 1 ou 2, dans lequel la teneur en huile lubrifiante de base dans la dispersion est située dans la plage allant de 20 % à 90 % en poids.

4. Procédé selon l'une quelconque des revendications précédentes, dans lequel le cérium contenu dans la dispersion est à l'état d'oxydation III.

5. Procédé selon l'une quelconque des revendications précédentes, dans lequel le métal alcalino-terreux contenu dans la dispersion est le calcium.

6. Procédé selon l'une quelconque des revendications précédentes, dans lequel la valeur du TBN (indice de basicité), exprimée en mg de KOH/g, est située dans la plage allant de 50 à 450.

7. Procédé selon l'une quelconque des revendications précédentes, dans lequel la dispersion huileuse du sel de cérium d'acides organiques (A) est obtenue par la réaction d'un acide organique avec un composé basique de cérium.

8. Procédé selon l'une quelconque des revendications précédentes, dans lequel le composé basique de cérium est le carbonate de cérium (III).

9. Procédé selon l'une quelconque des revendications précédentes, dans lequel la teneur en cérium dans la dispersion (A) correspond à un rapport entre le nombre d'équivalents de cérium et celui de l'acide organique situé dans la plage allant de 0,8 à 1,2.

10. Procédé selon l'une quelconque des revendications précédentes, dans lequel la quantité de composé basique du métal alcalino-terreux (B) utilisée correspond à un rapport entre le nombre d'équivalents dudit composé basique de métal et celui du composant (A) situé dans la plage allant de 1 à 50.

11. Procédé selon l'une quelconque des revendications 2 à 10, dans lequel le composé basique de métal alcalino-terreux est hydroxyde de calcium.

12. Procédé selon l'une quelconque des revendications précédentes, dans lequel le solvant (C) est utilisé en une quantité correspondant à un pourcentage en poids, calculé par rapport au composant (A), situé dans la plage allant de 10 à 500.

13. Procédé selon l'une quelconque des revendications précédentes, dans lequel le promoteur (D) est ajouté en une quantité correspondant à un pourcentage en poids, calculé par rapport au composé basique de métal alcalino-terreux, situé dans la plage allant de 2 à 400.

14. Procédé selon l'une quelconque des revendications précédentes, dans lequel la quantité de dioxyde de carbone (F) total utilisée correspond à un rapport entre le nombre d'équivalents de dioxyde de carbone et celui du métal alcalino-terreux basique situé dans la plage allant de 0,6 à 1,1.

15. Procédé selon la revendication 14, dans lequel la quantité de dioxyde de carbone utilisée dans chaque étape de carbonatation, exprimée en pourcentage en poids par rapport à la quantité totale, est située dans la plage allant de 5 à 95.

16. Procédé selon l'une quelconque des revendications précédentes, dans lequel le composant (E) est une huile lubrifiante de base utilisée pour disperser le sel surbasique contenant du cérium et un métal alcalino-terreux.

17. Procédé selon la revendication 16, dans lequel l'huile lubrifiante de base (E) est ajoutée au début du procédé de préparation avec d'autres réactifs, ou pendant le procédé ou à la fin du procédé, ou divisée en parties dans les diverses aux étapes du procédé, en une quantité totale correspondant à un pourcentage en poids, calculée par rapport au composant (A), située dans la plage allant de 10 à 400.

18. Procédé selon l'une quelconque des revendications précédentes, dans lequel l'étape de surbasification est réalisée à une température située dans la plage allant de 15 °C à 200 °C.

19. Procédé selon l'une quelconque des revendications précédentes, dans lequel chaque étape de carbonatation est réalisée à une température située dans la plage allant de 10 °C à 150 °C.

20. Procédé selon la revendication 19, dans lequel chaque étape de carbonatation est suivie d'une étape de maturation qui est réalisée à une température supérieure à la température de carbonatation et qui est située dans la plage allant de 20 °C à 160 °C.

21. Compositions lubrifiantes, comprenant :
a. Une ou plusieurs huiles de base de résine d'origine synthétique, minérale, végétale ou animale, et
b. 0,2 % à 10 % en poids d'une dispersion huileuse, calculé par rapport à (a) + (b), de sels surbasiques d'acides organiques contenant du cérium et un métal alcalino-terreux, pouvant être obtenue selon l'une quelconque des revendications 1 à 20.
